# DEMANDE DE BREVET EUROPEEN

(11) **EP 4 523 563 A1**
(43) Date de publication de la demande: **19.03.2025**
(21) Numéro de dépôt: 24180286.7
(22) Date de dépôt: 05.06.2024
(51) Int. Cl.: A44C 5/10, B21L 11/00, F16G 15/04, F16G 13/14, B21L 13/00, F16G 15/12

(54) **MAILLON D'UN ARTICLE, EMMAILLEMENT COMPORTANT UN TEL MAILLON ET ARTICLE COMPRENANT UN TEL EMMAILLEMENT**

(30) Priorité: 20.06.2023 FR 2306376
(71) Demandeur: Hermes Sellier, 75008 Paris (FR)
(72) Inventeur: WIESMANN, Peter, 75011 PARIS (FR)
(74) Mandataire: Santarelli

(57) **Abrégé**

L'invention concerne un maillon (10) d'un article, notamment de bijouterie et/ou de joaillerie, ou bien de maroquinerie, de textile, de cosmétique ou encore d'ameublement, comportant un corps principal (100) et un capuchon de fermeture (200) distincts, le corps principal (100) a une portion de base (110) avec une section élargie, une portion de tête (120) avec une section amoindrie et qui s'étend depuis la portion de base (110), et une fente d'insertion (130) ménagée dans la portion de tête (120), le capuchon de fermeture (200) comporte un espace interne (201) et une ouverture d'introduction (221) débouchant dans l'espace interne (201), et est configuré pour être emmanché, de manière amovible, par son ouverture d'introduction (221) sur la portion de tête (120) pour obturer la fente d'insertion (130), grâce à quoi le corps principal (100) et le capuchon de fermeture (200) définissent ensemble un maillon (10) fermé lorsqu'ils sont assemblés.

## Description

### DOMAINE TECHNIQUE DE L'INVENTION

La présente invention concerne un maillon d'un article notamment de bijouterie et/ou de joaillerie, ou bien de maroquinerie, de textile, de cosmétique ou encore d'ameublement.

L'invention concerne également un emmaillement comportant un tel maillon.

L'invention concerne également un article notamment de bijouterie et/ou de joaillerie, ou bien de maroquinerie, de textile, de cosmétique ou encore d'ameublement, comprenant un tel emmaillement.

Il peut par exemple s'agir d'une chaîne, notamment utilisée pour un collier ou un bracelet.

L'invention concerne également un procédé d'assemblage d'un tel emmaillement.

### ÉTAT DE LA TECHNIQUE

On connaît des articles, notamment de bijouterie et/ou de joaillerie du type chaîne, comportant un emmaillement formé d'une pluralité de maillons, chaque maillon étant en prise avec un autre maillon. Il peut s'agir par exemple d'anneaux pris les uns dans les autres et soudés, ou bien reliés les uns aux autres par des éléments d'interface du type charnière et comportant par exemple des axes ou goupilles de liaison.

On connaît le brevet européen EP 0 511 249 B1 qui décrit un maillon comportant une fente d'insertion et un corps annulaire de recouvrement configuré pour être disposé autour du maillon, au niveau de la fente d'insertion pour l'obturer.

En particulier, avant le montage du corps annulaire de recouvrement, un autre maillon peut être inséré au travers de la fente d'insertion.

Ensuite, le corps annulaire de recouvrement est glissé le long du maillon jusqu'à obturer la fente d'insertion et ainsi bloquer les deux maillons ensemble et former un emmaillement.

### EXPOSÉ DE L'INVENTION

L'invention vise à fournir un maillon d'un article de bijouterie et/ou de joaillerie, qui soit particulièrement simple et commode.

L'invention a ainsi pour objet, sous un premier aspect, un maillon d'un article, notamment de bijouterie et/ou de joaillerie, ou bien de maroquinerie, de textile, de cosmétique ou encore d'ameublement, comportant un corps principal et un capuchon de fermeture distinct du corps principal, dans lequel le corps principal a une portion de base avec une section élargie, une portion de tête avec une section amoindrie par rapport à la section élargie de la portion de base et qui s'étend depuis la portion de base, et une fente d'insertion ménagée dans la portion de tête et configurée pour permettre le passage d'un autre maillon, et dans lequel le capuchon de fermeture femelle comporte un espace interne et une ouverture d'introduction débouchant dans l'espace interne, le capuchon de fermeture étant configuré pour être emmanché, de manière amovible, par son ouverture d'introduction sur la portion de tête du corps principal de sorte à obturer la fente d'insertion, grâce à quoi le corps principal et le capuchon de fermeture définissent ensemble un maillon fermé lorsqu'ils sont assemblés.

Dans le maillon selon l'invention, le corps principal, qui est une partie mâle du maillon, et le capuchon de fermeture, qui est une partie femelle du maillon, forment donc ensemble le maillon fermé lorsqu'ils sont assemblés, c'est-à-dire emmanchés, ou emboîtés, avec le capuchon de fermeture qui a pour fonction d'obturer la fente d'insertion.

En d'autres termes, le maillon est ainsi formé de deux parties distinctes qui permettent, lorsqu'elles sont assemblées, à la fois de former le maillon et de le fermer.

On notera que la fente d'insertion est généralement prévue pour accueillir dans un espace interne du maillon, un autre élément tel qu'un autre maillon ou bien une partie d'un fermoir.

Ainsi, l'assemblage du maillon par emmanchement du capuchon de fermeture femelle avec le corps principal mâle peut permettre de verrouiller cet autre maillon ou cette partie de fermoir dans l'espace interne du maillon.

D'autres caractéristiques particulièrement simples et commodes du maillon selon l'invention sont décrites ci-après.

La portion de base du corps principal a globalement une forme en U, avec une première branche du U et une deuxième branche du U qui présente une première extrémité libre, et la portion de tête du corps principal a globalement une forme en U, avec une première branche du U qui est reliée à la première branche du U de la portion de base et une deuxième branche du U qui présente une deuxième extrémité libre en regard et à distance de la première extrémité libre, avec la fente d'insertion qui s'étend entre la première extrémité libre et la deuxième extrémité libre.

Le capuchon de fermeture comporte une portion de voûte configurée pour venir reposer sur la portion de tête du corps principal lorsque le capuchon de fermeture et le corps principal sont assemblés, et une portion de cerclage reliée à la portion de voûte, délimitant l'ouverture d'introduction et configurée pour obturer la fente d'insertion lorsque le corps principal et le capuchon de fermeture sont assemblés.

La portion de voûte a une section complémentaire de la section amoindrie de la portion de tête du corps principal pour former une section équivalente à la section élargie de la portion de base du corps principal lorsque le corps principal et le capuchon de fermeture sont assemblés.

La section amoindrie de la portion de tête du corps principal et la section de la portion de voûte du capuchon de fermeture sont chacune de forme semi-circulaire, et la section élargie de la portion de base du corps principal est circulaire.

La portion de cerclage est située sensiblement à mi-hauteur du maillon lorsque le corps principal et le capuchon de fermeture sont assemblés, de sorte que le maillon fermé soit sensiblement symétrique de part et d'autre de la portion de cerclage.

Le corps principal et le capuchon de fermeture sont réalisés dans des matériaux distincts.

L'un parmi le corps principal et le capuchon de fermeture est en métal, et l'autre parmi le corps principal et le capuchon de fermeture est en céramique.

L'invention a aussi pour objet, sous un deuxième aspect, un emmaillement d'un article notamment de bijouterie et/ou de joaillerie, ou bien de maroquinerie, de textile, de cosmétique ou encore d'ameublement, comprenant une pluralité de maillons assemblés, au moins deux à deux, les uns aux autres, comprenant au moins un maillon tel que décrit ci-dessus.

Selon un mode de réalisation, l'emmaillement comprend au moins un autre maillon de la pluralité de maillons qui est reçu dans l'espace interne du capuchon de fermeture de l'au moins un maillon.

Selon un mode de réalisation, l'emmaillement comprend en outre un fermoir assujetti d'une part à un maillon de la pluralité de maillons, et qui est configuré pour pouvoir d'autre part être assujetti de manière amovible à un autre maillon de la pluralité de maillons.

Selon un mode de réalisation, le fermoir comprend une partie principale présentant un corps central et deux portions ayant une forme en U s'étendant de part et d'autre du corps central, et une partie mobile configurée pour permettre d'ouvrir et de fermer le fermoir au niveau de l'une des portions ayant une forme en U, la partie principale et la partie mobile formant ensemble le fermoir qui présente globalement une forme similaire à l'au moins un maillon de la pluralité de maillons.

L'invention a aussi pour objet, sous un troisième aspect, un article notamment de bijouterie et/ou de joaillerie, ou bien de maroquinerie, de textile, de cosmétique ou encore d'ameublement comprenant un emmaillement tel que décrit ci-dessus, notamment pour former une chaîne de l'article.

L'invention a aussi pour objet, sous un quatrième aspect, un procédé d'assemblage d'un emmaillement comprenant au moins un maillon tel que décrit ci-dessus, et au moins un autre maillon, comportant les étapes de :
- fournir l'au moins un maillon avec le corps principal et le capuchon de fermeture désassemblés, et l'au moins un autre maillon ;
- introduire l'au moins un autre maillon sur le corps principal de l'au moins un maillon au travers de sa fente d'insertion ;
- déplacer le corps principal de l'au moins un maillon et l'au moins un autre maillon relativement l'un à l'autre de sorte à ce que la portion de base de l'au moins un maillon traverse l'au moins un autre maillon, et de sorte à aligner l'au moins un maillon et l'au moins un autre maillon ;
- introduire le capuchon de fermeture de l'au moins un maillon sur la portion de tête de l'au moins un maillon, de sorte à fermer l'au moins un maillon.

L'au moins un autre maillon peut être un maillon tel que décrit ci-dessus, et dans l'étape de fournir l'au moins un maillon et l'au moins un autre maillon, le corps principal et le capuchon de fermeture de l'au moins un autre maillon sont fournis assemblés, et dans l'étape de déplacer l'au moins un autre maillon et le corps principal de l'au moins un maillon relativement l'un à l'autre, le corps principal de l'au moins un maillon traverse l'espace interne de l'au moins un autre maillon, grâce à quoi le corps principal et le capuchon de fermeture de l'au moins autre maillon sont maintenus assemblés.

### BRÈVE DESCRIPTION DES FIGURES

L'invention, selon un exemple de réalisation, sera bien comprise et ses avantages apparaitront mieux à la lecture de la description détaillée qui suit, donnée à titre indicatif et nullement limitatif, en référence aux dessins annexés.
La figure 1 représente schématiquement, en perspective, un emmaillement formés d'un assemblage de plusieurs maillons conformes à l'invention, utilisés par exemple comme portion de chaîne d'un article de bijouterie et/ou de joaillerie.
La figure 2 est une vue en perspective d'un assemblage de deux des maillons de l'emmaillement de la figure 1.
La figure 3 est une vue en perspective d'un maillon de l'emmaillement des figures 1 et 2, pris isolément, dans un état assemblé.
La figure 4 est une vue en perspective du maillon de la figure 3, dans un état désassemblé.

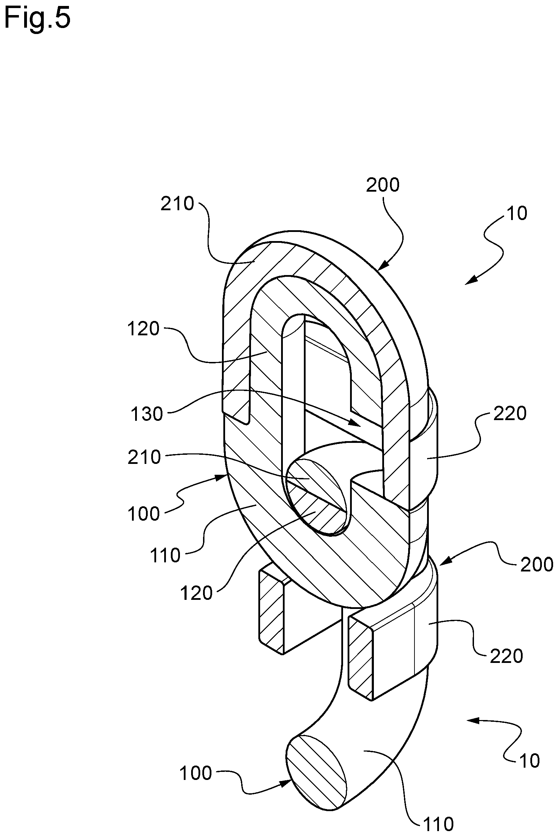

La figure 5 est une vue en perspective et en coupe d'un assemblage de deux maillons, disposés comme sur la figure 2 mais tournés de 90 °.
La figure 6 représente schématiquement en perspective l'assemblage d'un premier maillon et d'un deuxième maillon tels que ceux de la figure 2 pour former un emmaillement, selon une première étape d'assemblage.
La figure 7 est similaire à la figure 6, selon une deuxième étape d'assemblage des deux maillons.
La figure 8 est similaire aux figures 6 et 7, selon une troisième étape d'assemblage des deux maillons.
La figure 9 est similaire aux figures 6 à 8, selon une quatrième étape d'assemblage des deux maillons.
La figure 10 est similaire aux figures 6 à 9, selon une cinquième étape d'assemblage des deux maillons.
La figure 11 représente schématiquement en perspective éclatée un fermoir qui peut être utilisé dans un emmaillement comme celui de la figure 1.
La figure 12 est une vue en coupe médiane du fermoir de la figure 11.

### DESCRIPTION DÉTAILLÉE DE L'INVENTION

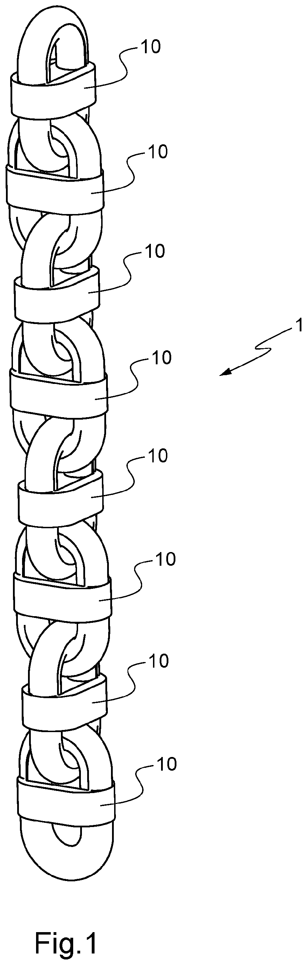

La figure 1 montre un emmaillement 1 qui peut être utilisé pour un article de bijouterie et/ou de joaillerie, ou bien de maroquinerie, de textile, de cosmétique ou encore d'ameublement.

L'emmaillement 1 représenté à la figure 1 peut par exemple servir à former une portion de chaîne d'un collier, ou d'un bracelet.

L'emmaillement 1 comprend plusieurs maillons 10 assemblés et assujettis les uns aux autres.

Plus généralement, l'emmaillement 1 comprend un ou plusieurs maillon 10 du type décrit ci-après, pouvant être assemblés et assujettis les uns aux autres et/ou à d'autres maillons de type identique ou de type différent.

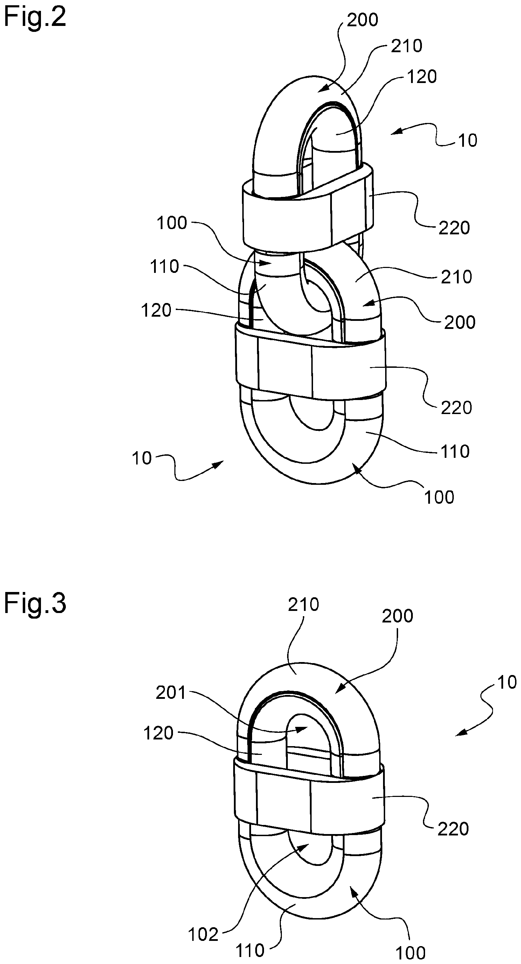

La figure 2 montre deux maillons 10 d'un tel emmaillement 1, qui sont assemblés et assujettis l'un à l'autre.

L'emmaillement 1 est formé par assemblage successif deux à deux de plusieurs maillons 10 qui sont réalisés en deux parties, et dont l'assemblage forme un maillon 10 fermé.

Les maillons 10 de l'emmaillement 1 comprennent chacun un corps principal 100, qui est ici une partie mâle du maillon 10, et un capuchon de fermeture 200, qui est ici une partie femelle du maillon 10.

Le corps principal 100 et le capuchon de fermeture sont amovibles et distincts l'un de l'autre, et forment ensemble un maillon 10 fermé lorsqu'ils sont assemblés.

Le corps principal 100 et le capuchon de fermeture 200 peuvent être réalisés à partir de matériaux distincts.

Par exemple, l'un parmi le corps principal 100 et le capuchon de fermeture 200, de préférence le corps principal 100, est en métal, par exemple en acier ou en laiton, et l'autre, de préférence le capuchon de fermeture 200, est en céramique.

Le maillon 10 qui en résulte est ainsi un maillon bi-matière.

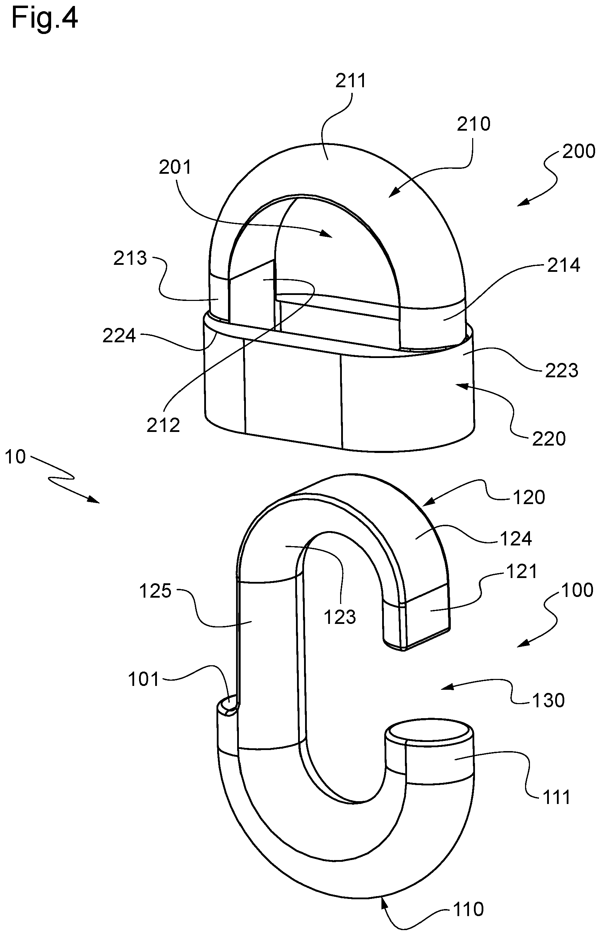

La figure 3 montre un maillon 10 pris isolément et la figure 4 montre ce même maillon mais dans un état dans lequel le corps principal 100 et le capuchon de fermeture 200 sont désassemblés.

Le corps principal 100 comprend une portion de base 110 ayant une section élargie, par exemple de forme circulaire.

Le corps principal 100 comprend également une portion de tête 120 ayant une section amoindrie par rapport à la section élargie de la portion de base 110, et qui s'étend depuis la portion de base 110.

La section amoindrie de la portion de tête 120 est ici de forme semi-circulaire.

Dans l'exemple illustré, la portion de base 110 et la portion de tête 120 sont d'un seul tenant.

Le corps principal 100 comprend en outre une fente d'insertion 130 ménagée dans la portion de tête 120.

La fente d'insertion 130 est configurée de sorte à permettre le passage d'un autre maillon (similaire au maillon 10 ou non) de la pluralité de maillons de l'emmaillement 1, ou encore d'un fermoir notamment tel qu'il sera décrit dans la suite du présent mémoire.

En particulier, la fente d'insertion 130 présente des dimensions qui permettent le passage d'un autre maillon de la pluralité de maillons.

Dans l'exemple illustré, la portion de base 110 a globalement une forme en U.

La portion de base 110 comporte une première extrémité au niveau d'une première branche de la forme en U, qui est ici une première extrémité 111 libre du corps principal 100.

La portion de tête 120 a également ici globalement une forme en U.

La portion de tête 120 comporte une première extrémité au niveau d'une première branche de la forme en U, qui est ici une deuxième extrémité 121 libre du corps principal 100.

La première extrémité 111 libre et la deuxième extrémité 121 libre sont en regard et à distance l'une de l'autre, l'espace entre la première extrémité 111 libre et la deuxième extrémité 121 libre définissant la fente d'insertion 130.

Dans l'exemple illustré, la portion de tête 120 présente une branche plus longue et une branche plus courte, la branche la plus courte étant celle comportant la deuxième extrémité 121 libre du corps principal 100.

La portion de tête 120 comporte une portion longiligne 125 formant la branche plus longue de la forme en U, et qui fait face à la fente d'insertion 130.

Dans l'exemple illustré, la portion de tête 120 comporte un côté convexe 123 orienté vers l'intérieur du maillon 10, et un côté plat 124 orienté vers l'extérieur du maillon 10.

La portion de base 110 et la portion de tête 120 sont ici affleurantes du côté de l'intérieur du maillon 10.

En raison de la différence de section entre la portion de base 110 et la portion de tête 120, le corps principal 100 comporte un épaulement 101 formé à la jonction de la portion de base 110 et de la portion de tête 120, du côté de l'extérieur du maillon 10.

Le capuchon de fermeture 200 comporte une portion de voûte 210 en forme d'arc comportant deux extrémités 213 et 214, et une portion de cerclage 220 reliant les extrémités 213 et 214 de la portion de voûte 210.

La portion de cerclage 220 est sensiblement de forme oblongue, et est reliée au niveau de deux zones de jonction 222 et 223 aux extrémités 213 et 214 de la portion de voûte 210.

En particulier, la portion de voûte 210 et la portion de cerclage 220 sont ici d'un seul tenant.

Le capuchon de fermeture 200 comporte ainsi une paroi qui est ajourée, formée par la portion de voûte 210 et la portion de cerclage 220.

Ici, la forme d'arc de la portion de voûte 210 correspond sensiblement à une forme de U, et présente par exemple une section semi-circulaire sensiblement constante.

La portion de voûte 210 et la portion de cerclage 220 délimitent ensemble un espace interne 201 du maillon 10, qui est accessible via la paroi ajourée du capuchon de fermeture 200.

En outre, la portion de cerclage 220 délimite une ouverture d'introduction 221 du capuchon de fermeture 200, qui débouche dans l'espace interne 201.

L'ouverture d'introduction 221 est de forme sensiblement rectangulaire, et est configurée pour pouvoir être introduite sur la portion de tête 120 du corps principal 100

La portion de cerclage 220 possède une hauteur, c'est-à-dire une dimension dans une direction transversale au plan dans lequel s'étend la portion de cerclage 220, sensiblement égale ou supérieure à la hauteur de la fente d'insertion 130, c'est-à-dire à la distance entre la première extrémité 111 libre et la deuxième extrémité 121 libre du corps principal 100.

Dans l'exemple illustré, la portion de voûte 210 comporte un côté convexe 211 orienté vers l'extérieur du maillon 10, et un côté plat 212 orienté vers l'intérieur du maillon 10.

La section semi-circulaire de la portion de voûte 210 du capuchon de fermeture 200 et la section semi-circulaire de la portion de tête 120 du corps principal 100 sont de formes complémentaires de sorte à former ensemble une section circulaire équivalente à la section circulaire de la portion de base 110 du corps principal 100.

Comme cela est visible sur la figure 3 notamment, lorsque le corps principal 100 et le capuchon de fermeture 200 sont assemblés, c'est-à-dire que le capuchon de fermeture 200 est inséré par son ouverture d'introduction 221 sur la portion de tête 120 du corps principal 100, le maillon 10 qui en résulte est fermé.

La portion de voûte 210 est configurée pour reposer sur la portion de tête 120 du corps principal 100.

En particulier, le côté plat 212 de la portion de voûte 210 et le côté plat 124 de la portion de tête 120 entrent en contact sensiblement sur l'ensemble de leur surface.

En d'autres termes, la portion de tête 120 forme une butée pour la portion de voûte 210, le capuchon de fermeture 200 recouvrant ainsi la portion de tête 120.

En raison de la complémentarité de forme des sections de la portion de tête 120 du corps principal 100 et de la portion de voûte 210 du capuchon de fermeture 200, le maillon 10 assemblé présente la forme d'un maillon fermé, comme s'il était réalisé d'un seul tenant.

La portion de cerclage 220 est située sensiblement à mi-hauteur du maillon 10 lorsque le corps principal 100 et le capuchon de fermeture 200 sont assemblés, de sorte que le maillon 10 fermé soit sensiblement symétrique de part et d'autre de la portion de cerclage 220.

La portion de cerclage 220 vient en recouvrement de la fente d'insertion 130, ainsi qu'en recouvrement de la portion longiligne 125 du corps principal 100, de sorte à obturer la fente d'insertion 130 et à fermer le maillon 10.

L'assemblage du corps principal 100 et du capuchon de fermeture 200 étant amovible, le maillon 10 n'est pas verrouillé, c'est-à-dire maintenu, dans un état assemblé par ce seul assemblage.

La portion de cerclage 220, qui ceinture le maillon fermé qui résulte de l'assemblage du corps principal 100 et du capuchon de fermeture 200, délimite deux espaces internes du maillon 10 situés de part et d'autre de la portion de cerclage 220.

Un premier espace interne correspond à l'espace interne 201 du capuchon de fermeture 200, dans lequel est logé au moins en partie la portion de tête 120 du corps principal 100 lorsque le corps principal 100 et le capuchon de fermeture 200 sont assemblés.

Un second espace interne 102 est délimité par la portion de base 110 du corps principal 100 et la portion de cerclage 220.

Ainsi, le maillon 10 qui est formé est un maillon d'une maille de type marine, et dans lequel les deux espaces internes 201 et 102 communiquent via l'ouverture d'introduction 221.

Chacun des premier espace interne 201 et second espace interne 102 est adapté pour recevoir, simultanément ou non, une portion d'un autre maillon assujetti au maillon 10.

La réception d'une portion d'un autre maillon dans le premier espace interne 201 a pour effet de verrouiller le maillon 10 dans son état assemblé.

En effet, cette portion de l'autre maillon, par exemple la portion de base 110 lorsque l'autre maillon est un maillon 10 similaire, est à la fois en butée contre le côté convexe 123 de la portion de tête 120 du corps principal 100, et contre la portion de cerclage 220 du capuchon de fermeture 200.

Ainsi, le capuchon de fermeture 200 ne peut être retiré du corps principal 100, et inversement, c'est-à-dire que le maillon 10 est maintenu dans un état assemblé.

L'emmaillement 1 est ainsi formé par assemblage successif de maillons 10 se maintenant dans un état assemblé par simple complémentarité de forme.

De préférence, les dimensions des espaces internes 201 et 102 sont telles qu'elles permettent d'accueillir une portion d'un autre maillon sans jeu ou quasiment sans jeu, de façon à minimiser les déplacements relatifs entre le corps principal 100 et le capuchon de fermeture 200 lorsqu'ils sont assemblés dans un emmaillement.

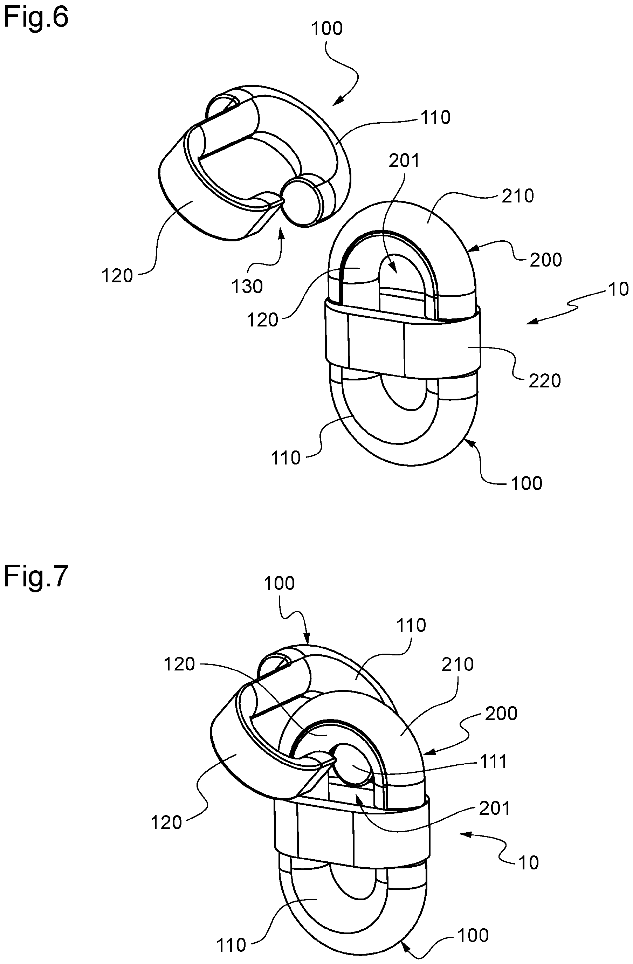

On va maintenant décrire l'assemblage de deux maillons 10, c'est-à-dire l'emmaillement d'un premier maillon 10 avec un deuxième maillon 10, en référence aux figures 6 à 10 qui montrent plusieurs étapes de cet assemblage.

Sur la figure 6, le premier maillon 10 comprend son corps principal 100 et son capuchon de fermeture 200 qui sont assemblés. Le premier maillon 10 est ainsi fermé, et sa fente d'insertion 130 est obturée car recouverte par la portion de cerclage 220.

L'espace interne 201 du premier maillon 10 est agencé en regard de la fente d'insertion 130 du deuxième maillon 10, ou autrement dit le corps principal 100 du deuxième maillon 10 est agencé avec sa fente d'insertion 130 en vis-à-vis du premier maillon 10, au niveau du premier espace interne 201 du premier maillon 10.

En particulier, la fente d'insertion 130 du deuxième maillon 10 est disposée en regard de la portion de voûte 210 du capuchon de fermeture 200 du premier maillon 10.

Sur la figure 7, le corps principal 100 du premier maillon 10 est introduit dans le deuxième maillon 10 au travers de la fente d'insertion 130 du deuxième maillon 10, jusqu'à une position dans laquelle la première extrémité 111 libre et la deuxième extrémité 121 libre du deuxième maillon 10 se trouvent en regard de l'espace interne 201 du premier maillon 10. En d'autres termes, le deuxième maillon 10 est introduit sur le premier maillon 10 au travers de la fente d'insertion du deuxième maillon 10.

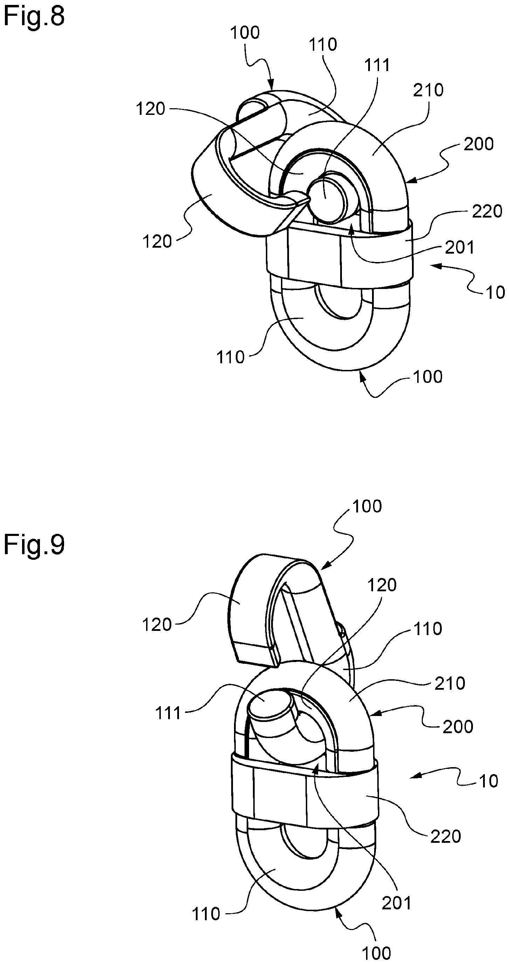

Sur la figure 8, le premier maillon 10 est déplacé en translation relativement au deuxième maillon 10, de sorte que la première extrémité 111 libre du deuxième maillon 10 traverse le premier espace interne 201 du premier maillon 10.

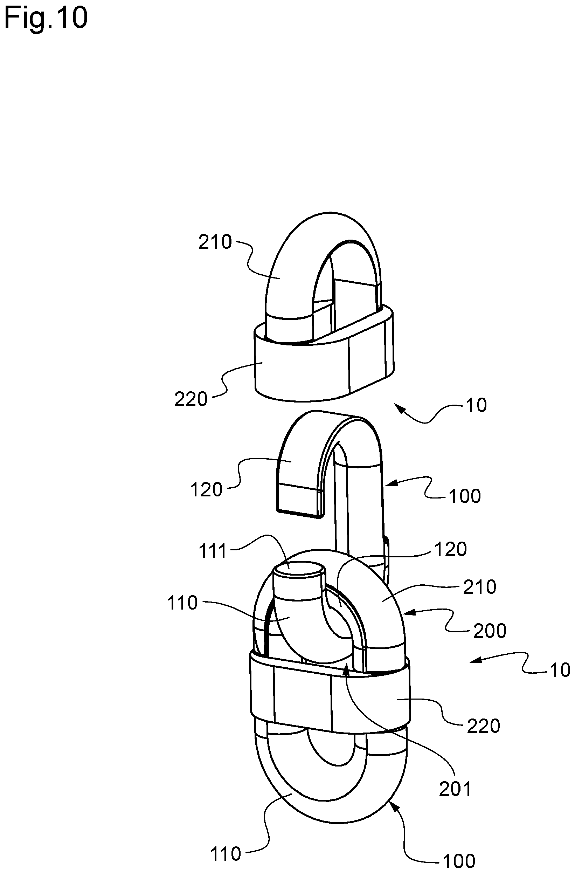

Sur la figure 9, le corps principal 100 du deuxième maillon 10 et le premier maillon 10 sont dans une position intermédiaire dans laquelle ils sont déplacés en rotation relativement l'un à l'autre de sorte à être alignés, c'est-à-dire jusqu'à atteindre la position de la figure 10 sur laquelle le premier maillon 10 est reçu par son premier espace interne 201 sur la portion de base 110 du deuxième maillon 10, le premier maillon 10 et le deuxième maillon 10 étant alors alignés et à angle droit relativement l'un à l'autre dans leur direction d'alignement.

Sur la figure 10, le capuchon de fermeture 200 du deuxième maillon 10 est agencé avec son ouverture d'introduction 221 en regard de la portion de tête 120 du deuxième maillon 10.

Le capuchon de fermeture 200 du deuxième maillon 10 est ensuite inséré sur la portion de tête 120 du deuxième maillon 10 afin de former ensemble le deuxième maillon 10 assemblé, comme représenté sur la figure 2. De cette manière, le premier maillon 10 est assujetti mécaniquement au deuxième maillon 10.

Par l'assemblage du deuxième maillon 10 avec le premier maillon 10, le premier maillon 10 est maintenu dans son état assemblé.

Un troisième maillon 10 peut être assujetti au deuxième maillon 10 de manière similaire, afin de maintenir le deuxième maillon 10 dans son état assemblé.

Ainsi, la description qui précède de l'assemblage de deux maillons 10 peut être répétée pour l'assemblage d'autres maillons, par exemple pour obtenir l'emmaillement 1 de la figure 1 et en particulier ici pour former une chaîne par exemple d'un article de bijouterie et/ou de joaillerie.

Toutefois, un emmaillement dans lequel au moins un maillon 10 est assujetti à d'autre maillons de type différent peut également être réalisé.

Le dernier maillon 10 d'un emmaillement peut être maintenu dans son état assemblé au moyen d'une pièce différente d'un maillon 10, et ne nécessitant elle-même pas d'autre maillon 10 pour son verrouillage.

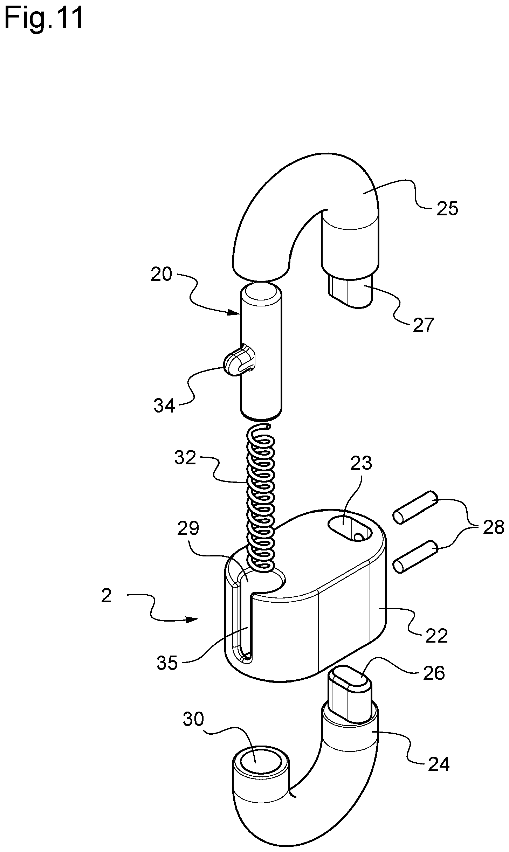

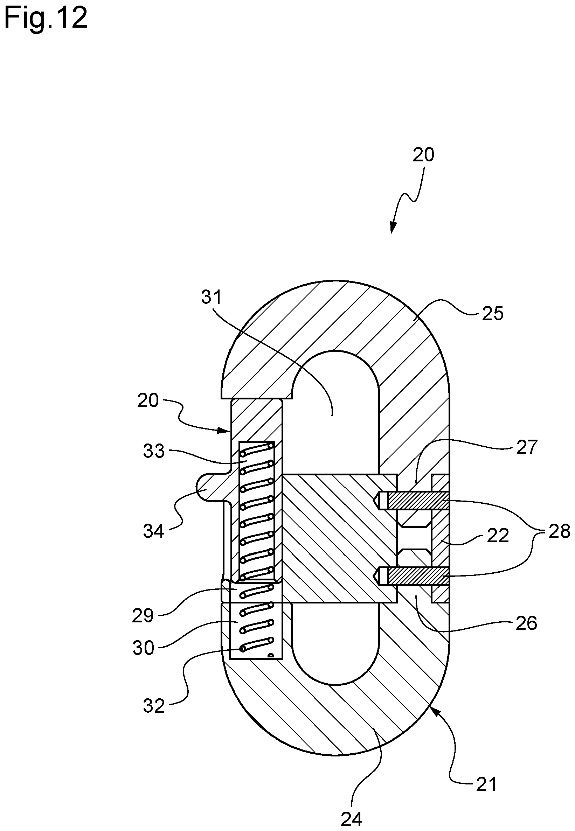

Il peut par exemple s'agir d'un fermoir 2 adapté au maillon 10, tel que représenté sur les figures 11 et 12.

Par exemple, un tel fermoir 2 peut également servir à fermer une chaîne formée par l'emmaillement 1.

Le fermoir 2 comprend une partie principale 21 et une partie mobile 20, assujettie mécaniquement à la partie principale 21 tout en étant mobile par rapport à cette dernière.

Ici, la partie mobile 20 est mobile en translation dans la partie principale 21, entre une position d'ouverture et une position de fermeture.

La partie principale 21 comprend un corps central 22, qui est ici globalement cylindrique de base oblongue.

Le corps central 22 comporte une première ouverture traversante 23 qui traverse la hauteur du corps central 22. Par exemple, la première ouverture traversante 23 est de section oblongue.

La partie principale 21 comprend une première portion 24 ayant globalement une forme en U et une seconde portion 25 ayant également globalement une forme en U.

La première portion 24 comporte un tenon 26 à l'extrémité d'une première branche de la forme en U. De manière similaire, la seconde portion 25 comporte également un tenon 27 à l'extrémité d'une première branche de la forme en U. Ici, les tenons 26 et 27 sont de section oblongue correspondant à la forme de la section de la première ouverture traversante 23.

Les tenons 26 et 27 de la première portion 24 et de la seconde portion 25 sont insérés dans la première ouverture traversante 23 respectivement de part et d'autre du corps central 22.

La partie principale 21 comporte deux goupilles 28 qui sont insérées transversalement dans des ouvertures que comporte le corps central 22 et chacun des tenons 26 et 27, afin de maintenir l'assemblage du corps central 22 et de la première portion 24 ainsi que la seconde portion 25.

La première portion 24 comporte deux branches de la forme en U sensiblement de même longueur, à l'exclusion du tenon 26, la deuxième branche de la forme en U étant ainsi en appui sur le corps central 22.

La seconde portion 25 comporte une deuxième branche de la forme en U qui est de longueur réduite par rapport à la première branche de la forme en U, la deuxième branche de la forme en U comportant ainsi une extrémité libre en regard du corps central 22.

La partie mobile 20 est ici formée par un pêne de forme globalement cylindrique circulaire.

Le corps central 22 comporte une deuxième ouverture traversante 29, qui est ici de forme cylindrique, et dans laquelle la partie mobile 20 peut coulisser.

En outre, l'extrémité de la deuxième branche de la forme en U de la première portion 24 comporte une ouverture borgne 30, sensiblement coaxiale avec la deuxième ouverture traversante 29 et dans laquelle la partie mobile 20 peut également coulisser au moins partiellement.

Lorsque la partie mobile 20 est dans sa position de fermeture, elle relie l'extrémité libre de la seconde portion 25 et le corps central 22, et définit alors un espace interne 31 fermé avec la seconde portion 25 et le corps central 22, dans laquelle un maillon 10 peut par exemple être reçu.

Lorsque la partie mobile 20 est dans sa position d'ouverture, elle est coulissée dans la deuxième ouverture traversante 29 et dans l'ouverture borgne 30, et ouvre l'espace interne 31.

Ainsi, le fermoir formé par la partie principale 21 et la partie mobile 20 a globalement la forme d'un maillon 10 tel que décrit ci-avant.

Afin de rappeler la partie mobile 20 dans sa position de fermeture, le fermoir 2 comprend un élément de rappel qui est ici un ressort 32 de type hélicoïdal de compression.

Le ressort 32 repose d'une part sur le fond de l'ouverture borgne 30.

La partie mobile 20 comporte en outre une ouverture borgne 33 qui est ouverte en regard de l'ouverture borgne 30, et qui comporte un fond contre lequel le ressort 32 repose également.

Ainsi, sous l'effet de sa compression le ressort 32 en appui à la fois contre le fond de l'ouverture borgne 30 et le fond de l'ouverture borgne 33 maintient la partie mobile 20 contre l'extrémité libre de la seconde portion 25.

Lorsque la partie mobile 20 est déplacée vers sa position d'ouverture, le ressort 32 agit à l'encontre de ce déplacement, en raison de sa compression.

Afin de faciliter la préhension de la partie mobile 20 et donc l'ouverture du fermoir 2, la partie mobile 20 peut comprendre un téton de préhension 34, saillant latéralement de la partie mobile 20.

A cet effet, le corps central 22 comporte une fente 35 dans la paroi séparant la deuxième ouverture traversante 29 de l'extérieur du corps central 22, de sorte à permettre le passage du téton de préhension 34 lors du coulissement de la partie mobile 20.

On notera qu'un maillon, un emmaillement et un fermoir tels que décrit ci-dessus sont particulièrement simples et commodes à mettre en oeuvre.

Dans une variante non illustrée, le corps principal 100 et le capuchon de fermeture sont réalisés dans des matières précieuses différentes.

On rappelle plus généralement que l'invention ne se limite pas aux exemples décrits et représentés.

## Revendications

1. Maillon (10) d'un article, notamment de bijouterie et/ou de joaillerie, ou bien de maroquinerie, de textile, de cosmétique ou encore d'ameublement, **caractérisé en ce qu'**il comporte un corps principal (100) et un capuchon de fermeture (200) distinct du corps principal (100), dans lequel le corps principal (100) a une portion de base (110) avec une section élargie, une portion de tête (120) avec une section amoindrie par rapport à la section élargie de la portion de base (110) et qui s'étend depuis la portion de base (110), et une fente d'insertion (130) ménagée dans la portion de tête (120), et dans lequel le capuchon de fermeture (200) comporte un espace interne (201) et une ouverture d'introduction (221) débouchant dans l'espace interne (201), le capuchon de fermeture (200) étant configuré pour être emmanché, de manière amovible, par son ouverture d'introduction (221) sur la portion de tête (120) du corps principal (100) de sorte à obturer la fente d'insertion (130), grâce à quoi le corps principal (100) et le capuchon de fermeture (200) définissent ensemble un maillon (10) fermé lorsqu'ils sont assemblés.

2. Maillon selon la revendication 1, **caractérisé en ce que** la portion de base (110) du corps principal (100) a globalement une forme en U, avec une première branche du U, et une deuxième branche du U qui présente une première extrémité (111) libre, et la portion de tête (120) du corps principal (100) a globalement une forme en U, avec une première branche du U qui est reliée à la première branche du U de la portion de base (110) et une deuxième branche du U qui présente une deuxième extrémité (121) libre en regard et à distance de la première extrémité (111) libre, avec la fente d'insertion (130) qui s'étend entre la première extrémité libre et la deuxième extrémité libre.

3. Maillon selon l'une des revendications 1 et 2, **caractérisé en ce que** le capuchon de fermeture (200) comporte une portion de voûte (210) configurée pour venir reposer sur la portion de tête (120) du corps principal (100) lorsque le capuchon de fermeture (200) et le corps principal (100) sont assemblés, et une portion de cerclage (220) reliée à la portion de voûte (210), délimitant l'ouverture d'introduction (221) et configurée pour obturer la fente d'insertion (130) lorsque le corps principal (100) et le capuchon de fermeture (200) sont assemblés.

4. Maillon (10) selon la revendication 3, **caractérisé en ce que** la portion de voûte (210) a une section complémentaire de la section amoindrie de la portion de tête (120) du corps principal (100) pour former une section équivalente à la section élargie de la portion de base (110) du corps principal (100) lorsque le corps principal (100) et le capuchon de fermeture (200) sont assemblés.

5. Maillon (10) selon la revendication 4, **caractérisé en ce que** la section amoindrie de la portion de tête (120) du corps principal (100) et la section de la portion de voûte (210) du capuchon de fermeture (200) sont chacune de forme semi-circulaire, et **en ce que** la section élargie de la portion de base (110) du corps principal (100) est circulaire.

6. Maillon (10) selon l'une des revendications 4 et 5, **caractérisé en ce que** la portion de cerclage (220) est située sensiblement à mi-hauteur du maillon (10) lorsque le corps principal (100) et le capuchon de fermeture (200) sont assemblés, de sorte que le maillon (10) fermé soit sensiblement symétrique de part et d'autre de la portion de cerclage (220).

7. Maillon (10) selon l'une des revendications 1 à 6, **caractérisé en ce que** le corps principal (100) et le capuchon de fermeture (200) sont réalisés dans des matériaux distincts.

8. Maillon (10) selon la revendication 7, **caractérisé en ce que** l'un parmi le corps principal (100) et le capuchon de fermeture (200) est en métal, et l'autre parmi le corps principal (100) et le capuchon de fermeture (200) est en céramique.

9. Emmaillement (1) d'un article notamment de bijouterie et/ou de joaillerie, ou bien de maroquinerie, de textile, de cosmétique ou encore d'ameublement, comprenant une pluralité de maillons assemblés, au moins deux à deux, les uns aux autres, **caractérisé en ce qu'**il comprend au moins un maillon (10) selon l'une quelconque des revendications 1 à 8.

10. Emmaillement (1) selon la revendication 9, **caractérisé en ce qu'**il comprend au moins un autre maillon de la pluralité de maillons qui est reçu dans l'espace interne (201) du capuchon de fermeture (200) de l'au moins un maillon (10).

11. Emmaillement (1) selon l'une des revendications 9 et 10, **caractérisé en ce qu'**il comprend en outre un fermoir (2) assujetti d'une part à un maillon de la pluralité de maillons, et qui est configuré pour pouvoir d'autre part être assujetti de manière amovible à un autre maillon de la pluralité de maillons.

12. Emmaillement (1) selon la revendication 11, **caractérisé en ce que** le fermoir (2) comprend une partie principale (21) présentant un corps central (22) et deux portions (24, 25) ayant une forme en U s'étendant de part et d'autre du corps central (22), et une partie mobile (20) configurée pour permettre d'ouvrir et/ou de fermer le fermoir au niveau de l'une des portions ayant une forme en U, la partie principale (21) et la partie mobile (20) formant ensemble le fermoir (2) qui présente globalement une forme similaire à l'au moins un maillon (10) de la pluralité de maillons.

13. Article notamment de bijouterie et/ou de joaillerie, ou bien de maroquinerie, de textile, de cosmétique ou encore d'ameublement comprenant un emmaillement (1) selon l'une des revendications 9 à 12, notamment pour former une chaîne de l'article.

14. Procédé d'assemblage d'un emmaillement (1) comprenant au moins un maillon (10) selon l'une quelconque des revendications 1 à 8, et au moins un autre maillon, comportant les étapes de :
- fournir l'au moins un maillon (10) avec le corps principal (100) et le capuchon de fermeture (200) désassemblés, et l'au moins un autre maillon ;
- introduire l'au moins un autre maillon sur le corps principal (100) de l'au moins un maillon (10) au travers de sa fente d'insertion (130) ;
- déplacer le corps principal (100) de l'au moins un maillon et l'au moins un autre maillon (10) relativement l'un à l'autre de sorte à ce que la portion de base (110) de l'au moins un maillon traverse l'au moins un autre maillon, et de sorte à aligner l'au moins un maillon (10) et l'au moins un autre maillon ;
- introduire le capuchon de fermeture (200) de l'au moins un maillon (10) sur la portion de tête (120) de l'au moins un maillon (10), de sorte à fermer l'au moins un maillon (10).

15. Procédé d'assemblage selon la revendication 14, **caractérisé en ce que** l'au moins un autre maillon est un maillon (10) selon l'une quelconque des revendications 1 à 8, et dans lequel dans l'étape de fournir l'au moins un maillon (10) et l'au moins un autre maillon (10), le corps principal (100) et le capuchon de fermeture (200) de l'au moins un autre maillon (10) sont fournis assemblés, et dans lequel dans l'étape de déplacer l'au moins un autre maillon et le corps principal (100) de l'au moins un maillon (10) relativement l'un à l'autre, le corps principal (100) de l'au moins un maillon (10) traverse l'espace interne (201) de l'au moins un autre maillon (10), grâce à quoi le corps principal (100) et le capuchon de fermeture (200) de l'au moins autre maillon (10) sont maintenus assemblés.
